# EUROPEAN PATENT SPECIFICATION

(11) **EP 2 828 718 B1**
(45) Date of publication and mention of the grant of the patent: **07.10.2020**
(21) Application number: 13708147.7
(22) Date of filing: 07.03.2013
(51) Int. Cl.: G05D 1/02, B63H 25/42

(54) **DYNAMIC LOAD COMPENSATION**
DYNAMISCHER LASTAUSGLEICH
COMPENSATION DE CHARGE DYNAMIQUE

(30) Priority: 22.03.2012 NO 20120344
(43) Date of publication of application: 28.01.2015
(73) Proprietor: Kongsberg Maritime AS, 3601 Kongsberg (NO)
(72) Inventor: MATHIESEN, Eirik, N-3191 Horten (NO); REALFSEN, Bjørnar, N-3191 Horten (NO); JØRGENSEN, Ole Henrik, N-3191 Horten (NO); JOHANNESSEN, Petter Faugstad, N-3191 Horten (NO)
(74) Representative: Protector IP AS
(86) International application number: PCT/EP2013/054588
(87) International publication number: WO 2013/139609

(56) References cited:
- Raban D.: "Integrated Control of Marine Electrical Power Systems (Thesis)", Department of Marine Technology, 28 January 2008 (2008-01-28), page 231PP, XP002697974, Norwegian University of Science and Technology Retrieved from the Internet: URL:http://www.marin.ntnu.no/~assor/PhD%20 Thesis/Phd_Radan_NTNU.pdf [retrieved on 2013-05-29]

## Description

The invention is a method for reducing load and frequency variations induced by variations in heavy consumer load in the power distribution system for a dynamically positioned vessel.

### Field of the invention

The present invention relates to a method for reducing load and frequency variations in the high voltage power distribution system while the vessel is controlled by a dynamic positioning (DP) control system or its like by adjusting the available power or torque for the DP controlled thrusters in such a manner that the station keeping conditions are not undermined. The present invention presents way of linking load control and position/velocity control together that has never been done before.

### Background of the invention

A dynamic positioning system controls the alongship, athwartship and rotational movement of a vessel, rig, barge or its like. A vessel controlled by a DP control system or its like, shall always strive to fulfill a commanded velocity and position in the axes that are controlled. The DP system controls the vessel movements by the means of thrusters, propellers and rudders. For simplicity and without loss of generality we will use the term thruster for any propulsion means in the rest of the description of the invention. The most common power system today is diesel electric, meaning that the thrusters are propelled by an electric drive and that power is provided by power generators such as diesel-generators, fuel cells, gas-turbines, dual fuel engines, etc. The power is taken from a power plant with many consumers, where the thrusters normally being the dominant one. The power is normally supplied to the power plant by diesel-generators. A high number of diesel generators are normally required to be connected to the power plant in order to keep a stable frequency in the occurrence of consumer load variations from e.g. heave compensation, draw-work, winch and crane. Frequency variations can be fatal for the power system and might lead to black-out, fallout of subsystems, synchronization problems for generators that shall be connected to the power grid and increased fuel consumption. The offshore industry has for many years desired to reduce the number of online generators without risk of frequency variations and potential black-out, but no substantial solution has been provided for this problem. There are several benefits from reducing the number of online generators, such as reduced Nox emission, reduced sooting, reduced fuel consumption, and reduced maintenance on the engines.

Systems for handling load and power supply to compensate for variations in load are known in the field, such as exemplified in US2006/111855 where power may be redirected from the thruster, e.g. to heave compensation, and US2008/284369 where the power supply is controlled based on information about the torque in the motors and e.g. the signals from a dynamic positioning control system. None of these do, however, address the problems that occur due to the interactions between the load control of the power plant and the position/velocity control of the vessel.

Another conventional DP system is known from Raban D., "Integrated Control of Marine Electrical Power Systems (Thesis)".

The proposed invention solves the problem of reducing the number of online generators without significant frequency variations by the use of the equipment normally installed on a DP controlled vessel, as described in the accompanying claims.

Thus the invention relates to a system according to claim 1 including a control law for the dynamic positioning in order to keep the vessel state within given position and velocity frames, a thrust allocation method that allocates thrust so that the given position and velocity frames are kept and a consumer load control that reduces thruster loads in order to compensate for load variations on other consumers in the power distribution system. The invention will be described more in detail below with reference to the accompanying drawings, illustrating the invention by way of examples.
Fig. 1 illustrates the system according to the invention.
Fig. 2 illustrates the consumer load control of the system.
Fig. 3a-e illustrates the dynamic load compensation according to the invention.

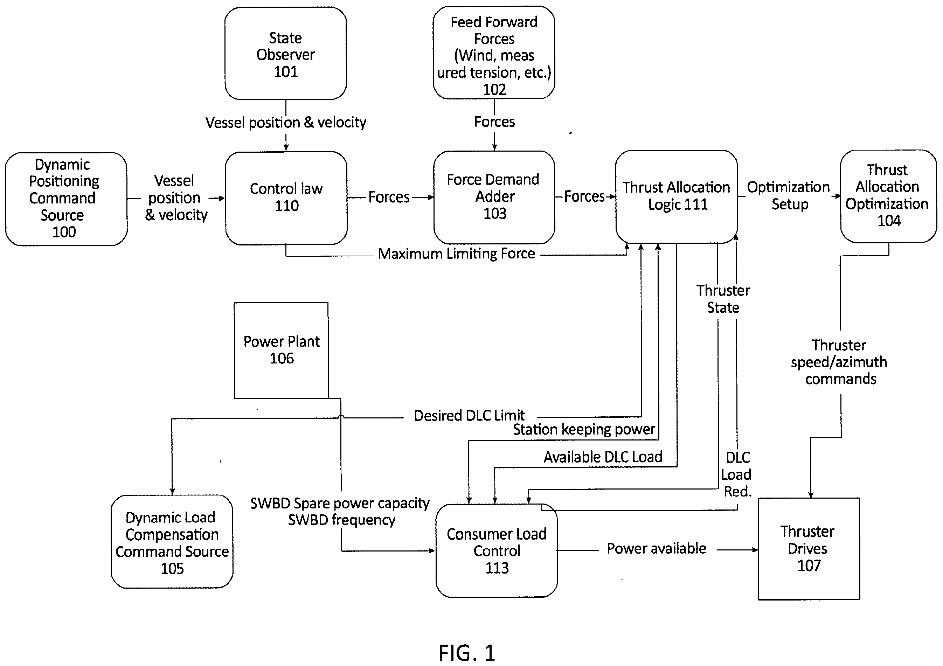

The invention is related to a method and system as illustrated in figure 1 for dynamic load control (DLC) within a dynamic positioning system. The DLC system preferably comprises a control law 110, a thrust allocation logic 111 and a consumer load control 113. The objective of the control law 110 is to calculate force demand in each of the controlled axes in order to compensate for deviations between the desired position and velocity received from the source 100 and the actual vessel position and velocity received from a state observer 101. A maximum limiting force is transmitted to the thrust allocation logic 111.

In addition a thrust allocation optimization 104 solves a nonlinear optimization problem in order to calculate the thrust amount and direction for each thruster, propeller and rudder controlled by the DP control system such that the thrust demand in each axis given by the force demand adder 103 is fulfilled. Other constraints for the optimization problem may also apply, e.g. by sensing wind, tension etc 102. The objective for the minimization problem solved by the thrust allocation optimization 104 is normally to minimize the total power usage for the thrusters.

The invention requires a certain amount of thrusters to be available for the DP control system. In the preferred embodiment it comprises at least two freely rotatable thrusters (azimuth thrusters) must be available for DLC. At least a sufficient number of thrusters must be available, so that the remaining thrusters can provide thrust in all the controlled axes. The thrust allocation logic 111 will set up the objective and the constraints for the optimization problem to be solved by 104.

The objective for the consumer load control 113 is to calculate the power limit for each thruster such that the total load variations are kept to a minimum. In a normal dynamic positioning system the control law 110 will demand a force to compensate for any deviation from a given position (resp. heading) and velocity (resp. rate of turn) setpoint. In the present invention a tolerance window is implemented for the deviations so that the deviations have to be outside the window before the controller demands a compensating thrust, or the position within the window may be used to decide the necessary applied force.

A number of windows with different sizes may also be and thus from the calculated window sizes for position and velocity deviation we calculate an acceptable force deviation limit. This is fed into the thrust allocation logic 111.

In addition a dynamic load compensation command source 105 may be used to provide a desired DLC limit to the thrust allocation logic 111. The power plant 106 in figure 1 is connected to the consumer load control and also provides information about the spare power capacity and the frequency of the generators. The power plant may also comprise means for increasing the capacity by activating extra power generators, if available if the spare power capacity is too low or the frequency deviates from the ideal system frequency.

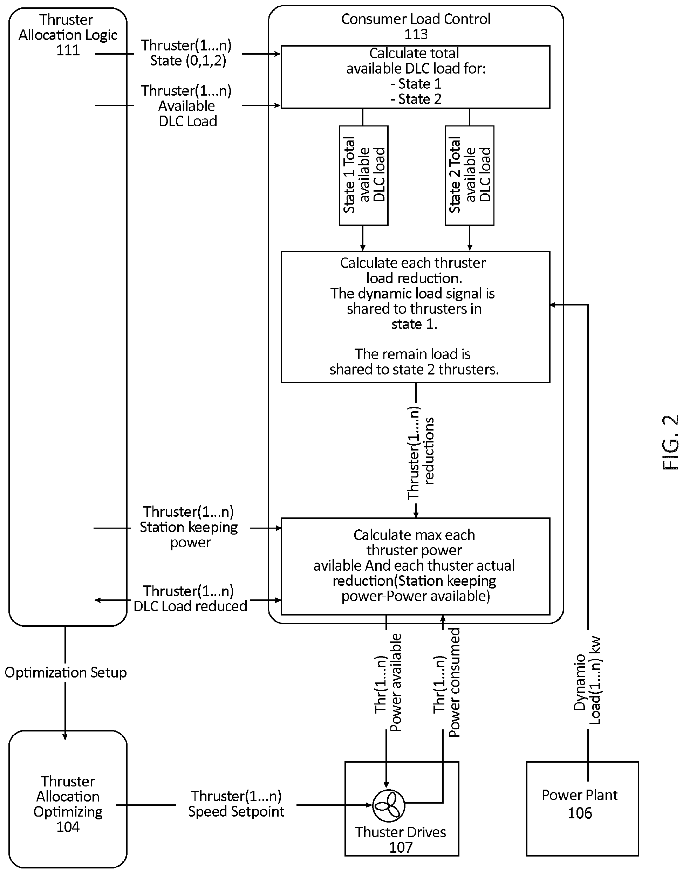

As illustrated in figure 2 the thrusters and propellers may preferably be separated into two groups by the thrust allocation logic 111. This separation is done in order to have control of the force taken away by the DLC. One group is to be used for dynamic load compensation, and the other is not. All thrusters are used to fulfill the thrust demand from the control law 110. The thrusters in the group not used for DLC shall in addition compensate for the thrust loss caused by the DLC. The amount of load reduced per thruster is sent from the consumer load control 113 to the thrust allocation logic 111. This load is converted to force loss, and the force loss is used as an input to an averaging filter. The output from this filter is used as a feed forward force that is added to the thrust demand for the thrusters not used by DLC.

After the thrust has been allocated to the thruster in the group for DLC the available DLC load is calculated based on the amount of thrust allocated to the DLC thrusters and the acceptable force deviation limit sent from 110 to 111. The available DLC load is sent to the consumer load control 113. The consumer load control 113 will then limit the load on the thruster drive normally by direct power or torque limitation or by other control means.

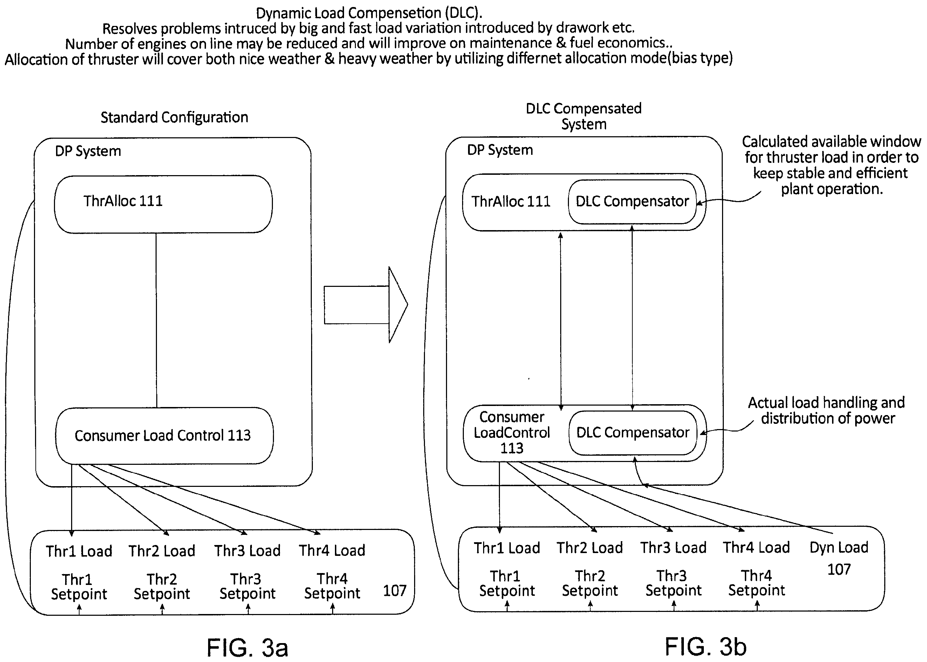

Fig. 3a illustrates the known system on the left using a with a DP system having a thruster allocation system and a consumer load control, where heave compensation affects the load and frequency of the power generators directly. In fig. 3b the system according to the invention is provided with the dynamic load compensation which maintains the vessel position relative to the calculated available window in order to maintain stable and efficient power plant operation in the thrust allocator 111, and controlling the actual load handling and power distribution in the consumer load control 113, thus obtaining a dynamic load in the thruster drives 107.

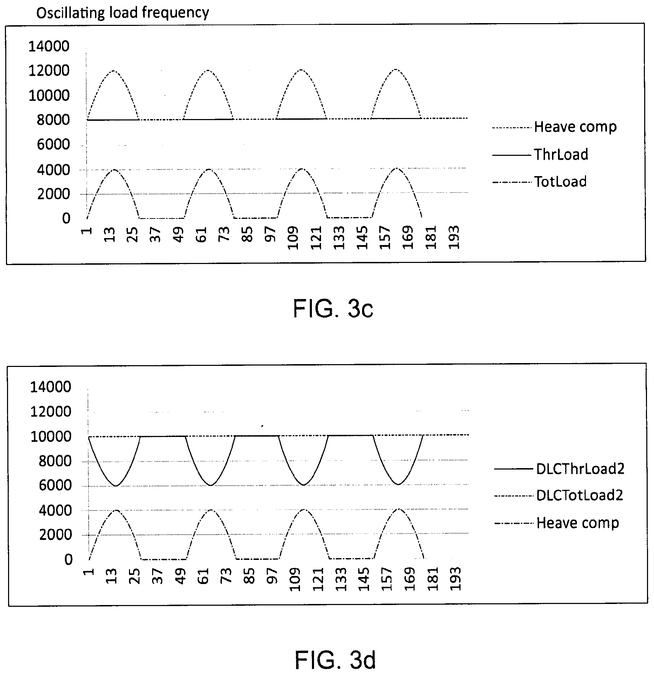

In the curves in fig. 3c which illustrates the known art the lower curve illustrates a situation with a periodic heave compensation (lower curve). The thruster load is maintained at a constant level which leads to a corresponding variation in the total load on the system (upper curve).

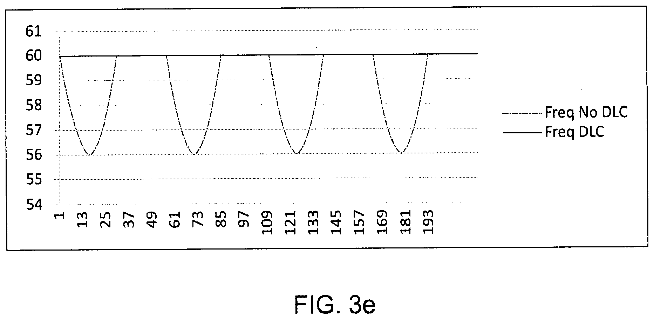

Fig. 3d shows a situation corresponding to the situation in fig. 3c, using the present invention. As is seen the thruster load is reduced in the opposite direction thus keeping the total load constant. Fig. 3e illustrates the corresponding frequency changes as a response to the heave compensation when the load capacity is exceeded in a system according to the known art, and the constant 60Hz frequency in the system according to the invention.

To summarize the invention relates to a system for reducing load and frequency variations in the power distribution of a dynamically positioned vessel. The system comprising a consumer load control being connected to at least one power generator and at least one thruster, the consumer load control being adapted to monitor the available power in the system from said at least one power generator and the power consumption from said at least one thruster as well as other power consumers in the system, and a dynamic positioning (DP) unit monitoring the position of the vessel calculating the required thruster capacity for maintaining a predetermined position.

The consumer load control and the DP unit is normally implemented in separate control systems, but can be merged in a common control system if applicable.
The DP unit is adapted to define an acceptable window for variations in said position and velocity relative to the predetermined position and velocity, and said consumer load control is adapted to adjust the power provided to said thruster in order to reduce total load variations depending on the available power and to the position of the vessel relative to said window. The window specifies a tolerable slack that is dependent upon the installed equipment and vessel operation.

The system comprises available power that has an essentially periodic variation. The system being adapted to analyze the variations and thus adjust said vessel position within said window by providing a compensating thrust in order to avoid a static position deviation. The analysis includes a step where the amount of load reduced per thruster is sent from the consumer load control 113 to the thrust allocation logic 111. This load is converted to force loss, and the force loss is used as an input to an averaging filter. The output from this filter is used as a feed forward force that is added to the thrust demand for one of the at least one thruster or additional thrusters.

The system might be adapted to cut the load reduction done by the consumer load control when the vessel is positioned outside said window in order to bring the vessel into the said window.

The consumer load control might be adapted to receive information about the planned power consumption in other units in the system in order to improve the calculation of the power balance in the system.

The DP unit might be adapted to adjusting the power consumption in each thruster for adjusting the position of the vessel. The consumer load control might be adapted to assign an available power to each thruster in the system based on the adjustments done by the DP unit.
If the DP unit requires a power for adjusting the position in at least one thruster is exceeding the available power, an increase in the power is made available for the thruster from the consumer load control.

The consumer load control is adapted to assign a time varying available power to at least one thruster based on the calculated power consumption in the system.

## Claims

1. System for reducing load and frequency variations in the power distribution of a dynamically positioned vessel, the system comprising
a consumer load control (113) being connected to at least one power generator and at least one thruster (107), the consumer load control (113) being adapted to monitor the available power in the system from said at least one power generator and the power consumption from said at least one thruster as well as other power consumers in the system, and
a dynamic positioning (DP) unit monitoring the position of the vessel and including a thrust allocation logic (111) calculating the required thruster capacity for maintaining a predetermined position, **characterised in that**
the DP unit is adapted to define an acceptable window for variations in said position relative to the predetermined position and communicate this to said consumer load control (113), and said consumer load control (113) is adapted to adjust the power provided to said thruster to compensate for load variations on other consumers in the power distribution in order to reduce total load variations depending on the available power and on the position of the vessel relative to said window defined by the dynamic positioning (DP) unit, said consumer load control (113) being further adapted to communicate thruster load reduction to said thrust allocation logic (111), and the thrust allocation logic (111) being adapted to convert the thruster load reduction to a feed forward force, said feed forward force being used for calculating the required thruster capacity.

2. System according to claim 1, wherein said available power has an essentially periodic variation, the system being adapted to analyze the variations and thus adjust said vessel position within said window by providing a compensating thrust in order to avoid a static position deviation.

3. System according to claim 1, wherein the system is adapted to cut the load reduction done by the consumer load control when the vessel is positioned outside said window in order to bring the vessel into the said window.

4. System according to claim 1, wherein said consumer load control is adapted to receive information about the planned power consumption in other units in the system.

5. System according to claim 1, wherein the DP unit is adapted to adjust the power consumption in each thruster for adjusting the position of the vessel, and the consumer load control being adapted to assign an available power to each thruster in the system.

6. System according to claim 5, wherein the DP unit, if the required power for adjusting the position in at least one thruster exceeds the available power, requests an increase in the power made available for the thruster from the consumer load control.

7. System according to claim 6, wherein the consumer load control is adapted to assign a time varying available power to at least one thruster.

8. System according to any of the previous claims, wherein the thruster load reduction is converted to force loss, the force loss is used as an input to an averaging filter, and an output from said averaging filter is used as said feed forward signal.

## Patentansprüche

1. System zum Reduzieren von Last- und Frequenzschwankungen in der Stromverteilung eines dynamisch positionierten Schiffs, wobei das System
eine Verbraucherlaststeuerung (113) umfasst, die mit mindestens einem Leistungsgenerator und mindestens einem Strahlruder (107) verbunden ist, wobei die Verbraucherlaststeuerung (113) dazu ausgelegt ist, die verfügbare Leistung in dem System des mindestens einen Leistungsgenerators und den Leistungsverbrauch des mindestens einen Strahlruders sowie von anderen Leistungsverbrauchern in dem System zu überwachen, und
eine dynamische Positionierungseinheit (DP), die die Position des Schiffs überwacht und eine Schubzuweisungslogik (111) einschließt, die die erforderliche Strahlruderkapazität zur Aufrechterhaltung einer vorbestimmten Position berechnet, **dadurch gekennzeichnet, dass**
die DP-Einheit dazu ausgelegt ist, ein vertretbares Fenster für Schwankungen in der Position relativ zu der vorbestimmten Position zu definieren und dies der Verbraucherlaststeuerung (113) mitzuteilen, und die Verbraucherlaststeuerung (113) dazu ausgelegt ist, die an das Strahlruder bereitgestellte Leistung einzustellen, um Lastschwankungen bei anderen Verbrauchern in der Leistungsverteilung auszugleichen, um Gesamtlastschwankungen in Abhängigkeit von der verfügbaren Leistung und an der Position des Schiffs relativ zu dem durch die dynamische Positionierungseinheit (DP) definierten Fenster zu reduzieren, wobei die Verbraucherlaststeuerung (113) ferner dazu ausgelegt ist, Strahlruderlastreduzierung an die Schubzuweisungslogik (111) zu übermitteln, und wobei die Schubzuweisungslogik (111) dazu ausgelegt ist, die Strahlruderlastreduzierung in Vortrieb umzuwandeln, wobei der Vortrieb zur Berechnung der erforderlichen Strahlruderkapazität verwendet wird.

2. System nach Anspruch 1, wobei die verfügbare Leistung eine im wesentlichen periodische Schwankung aufweist, wobei das System dazu ausgelegt ist, die Schwankungen zu analysieren und somit die Schiffsposition innerhalb des Fensters durch Bereitstellen eines Ausgleichsschubs einzustellen, um eine statische Positionsabweichung zu vermeiden.

3. System nach Anspruch 1, wobei das System dazu ausgelegt ist, die durch die Verbraucherlaststeuerung erfolgte Lastreduzierung, wenn das Schiff außerhalb des Fensters positioniert ist, zu unterbrechen, um das Schiff in das Fenster zu bringen.

4. System nach Anspruch 1, wobei die Verbraucherlaststeuerung dazu ausgelegt ist, Informationen über den geplanten Leistungsverbrauch in anderen Einheiten in dem System zu erhalten.

5. System nach Anspruch 1, wobei die dynamische Positionierungseinheit dazu ausgelegt ist, den Leistungsverbrauch jedes Strahlruders zur Einstellung der Position des Schiffs einzustellen, und die Verbraucherlaststeuerung dazu ausgelegt ist, jedem Strahlruder in dem System eine verfügbare Leistung zuzuordnen.

6. System nach Anspruch 5, wobei die dynamische Positionierungseinheit, wenn die erforderliche Leistung zur Einstellung der Position in mindestens einem Strahlruder die verfügbare Leistung übersteigt, eine Erhöhung der für das Strahlruder zur Verfügung gestellten Leistung von der Verbraucherlaststeuerung anfordert.

7. System nach Anspruch 6, wobei die Verbraucherlaststeuerung dazu ausgelegt ist, mindestens einem Strahlruder eine zeitlich variierende verfügbare Leistung zuzuordnen.

8. System nach einem der vorangehenden Ansprüche, wobei die Strahlruderlastreduzierung in Kraftverlust umgewandelt wird, der Kraftverlust als Eingangsgröße für einen Mittelwertbildungsfilter verwendet wird und ein Ausgabesignal des Mittelwertbildungsfilters als Vortriebssignal verwendet wird.

## Revendications

1. Système pour réduire des variations de charge et de fréquence dans la distribution de puissance d'un navire positionné de manière dynamique, le système comprenant
une commande de charge de consommateur (113) étant connectée à au moins un générateur de puissance et au moins un propulseur (107), la commande de charge de consommateur (113) étant adaptée pour surveiller la puissance disponible dans le système à partir dudit au moins un générateur de puissance et la consommation de puissance dudit au moins un propulseur ainsi que d'autres consommateurs d'énergie dans le système, et
une unité de positionnement dynamique (DP) surveillant la position du navire et comprenant une logique d'attribution de poussée (111) calculant la capacité de propulseur requise pour maintenir une position prédéterminée, **caractérisé en ce que**
l'unité DP est adaptée pour définir une fenêtre acceptable pour des variations de ladite position par rapport à la position prédéterminée et la communiquer à ladite commande de charge de consommateur (113), et ladite commande de charge de consommateur (113) est adaptée pour ajuster la puissance fournie audit propulseur pour compenser des variations de charge sur d'autres consommateurs dans la distribution de puissance afin de réduire des variations de charge totales en fonction de la puissance disponible et de la position du navire par rapport à ladite fenêtre définie par l'unité de positionnement dynamique (DP), ladite commande de charge de consommateur (113) étant en outre adaptée pour communiquer une réduction de charge de propulseur à ladite logique d'attribution de poussée (111), et la logique d'attribution de poussée (111) étant adaptée pour convertir la réduction de charge de propulseur en une force de réaction vers l'avant, ladite force de réaction vers l'avant étant utilisée pour calculer la capacité de propulseur requise.

2. Système selon la revendication 1, dans lequel ladite puissance disponible a une variation essentiellement périodique, le système étant adapté pour analyser les variations et ainsi ajuster ladite position de navire dans ladite fenêtre en fournissant une poussée de compensation afin d'éviter un écart de position statique.

3. Système selon la revendication 1, dans lequel le système est adapté pour couper la réduction de charge effectuée par la commande de charge de consommateur lorsque le navire est positionné à l'extérieur de ladite fenêtre afin d'amener le navire dans ladite fenêtre.

4. Système selon la revendication 1, dans lequel ladite commande de charge de consommateur est adaptée pour recevoir des informations sur la consommation de puissance planifiée dans d'autres unités du système.

5. Système selon la revendication 1, dans lequel l'unité DP est adaptée pour ajuster la consommation de puissance dans chaque propulseur afin d'ajuster la position du navire, et la commande de charge de consommateur étant adaptée pour attribuer une puissance disponible à chaque propulseur dans le système.

6. Système selon la revendication 5, dans lequel l'unité DP, si la puissance requise pour ajuster la position dans au moins un propulseur dépasse la puissance disponible, demande une augmentation de la puissance rendue disponible pour le propulseur à partir de la commande de charge de consommateur.

7. Système selon la revendication 6, dans lequel la commande de charge de consommateur est adaptée pour attribuer une puissance disponible variant dans le temps à au moins un propulseur.

8. Système selon l'une quelconque des revendications précédentes, dans lequel la réduction de charge de propulseur est convertie en perte de force, la perte de force est utilisée comme entrée d'un filtre de moyenne, et une sortie dudit filtre de moyenne est utilisée comme ledit signal de réaction vers l'avant.
